# EUROPÄISCHE PATENTSCHRIFT

(11) **EP 4 279 948 B1**
(45) Veröffentlichungstag und Bekanntmachung des Hinweises auf die Patenterteilung: **08.04.2026**
(21) Anmeldenummer: 22173687.9
(22) Anmeldetag: 17.05.2022
(51) Int. Cl.: G01S 7/481, G01S 17/931, G06V 20/56, B60Q 1/00

(54) **SENSORVORRICHTUNG FÜR EINEN KRAFTFAHRZEUGSCHEINWERFER**
SENSOR DEVICE FOR A MOTOR VEHICLE HEADLIGHT
DISPOSITIF CAPTEUR POUR UN PHARE DE VOITURE AUTOMOBILE

(43) Veröffentlichungstag der Anmeldung: 22.11.2023
(73) Patentinhaber: ZKW Group GmbH, 3250 Wieselburg (AT)
(72) Erfinder: Hartmann, Peter, 3394 Schönbühel an der Donau (AT); Kosmas, Kyriakos, 3380 Pöchlarn (AT); Fahrngruber, Simon, 3242 Texing (AT); Popp, Roman, 3251 Purgstall an der Erlauf (AT); Mitterlehner, Stefan, 3240 Mank (AT); Musheghyan, Mikayel, 3250 Wieselburg (AT)
(74) Vertreter: Patentanwaltskanzlei Matschnig & Forsthuber OG

(56) Entgegenhaltungen:
- EP-A1- 3 659 861
- US-A1- 2018 329 060

## Beschreibung

Die Erfindung betrifft eine Sensorvorrichtung für einen Kraftfahrzeugscheinwerfer zum Erkennen eines vor der Sensorvorrichtung vorhandenen, Licht abstrahlenden Objekts, wobei die Sensorvorrichtung Folgendes umfasst:
- ein Sensorpixel-Array zum Erkennen von Licht eines Licht abstrahlenden Objekts, wobei das Sensorpixel-Array zumindest eine Zeile und mehrere Spalten von Sensorpixeln, welche gesehen in einem ordnungsgemäß eingebauten Zustand der Sensorvorrichtung in einem Kraftfahrzeug entlang einer horizontalen Geraden angeordnet sind, umfasst, wobei das Sensorpixel-Array eingerichtet ist, auf die Sensorpixel einfallendes Licht zu erfassen,
- ein Projektionsoptiksystem, welches eingerichtet ist, Licht abstrahlende Objekte vor dem Projektionsoptiksystem in einem Abbildungsbereich in einer Bildebene des Projektionsoptiksystems in Form von Bildpunkten abzubilden, wobei das Sensorpixel-Array in dem Abbildungsbereich der Bildebene angeordnet ist, wobei der Abbildungsbereich derart größer ist als das Sensorpixel-Array, dass der Abbildungsbereich zumindest in vertikaler Richtung dem Sensorpixel-Array übersteht,

wobei die Sensorvorrichtung eine Abbildungsmodifizierungseinrichtung umfasst, welche zwischen dem Sensorpixel-Array und dem Projektionsoptiksystem angeordnet ist, wobei die Abbildungsmodifizierungseinrichtung eingerichtet ist,
   - die im Abbildungsbereich des Projektionsoptiksystems abbildbaren Bildpunkte im Wesentlichen ausschließlich in vertikaler Richtung zu defokussieren, sodass Bildpunkte, welche ohne dem Einwirken der Abbildungsmodifizierungseinrichtung im Abbildungsbereich außerhalb des Sensorpixel-Arrays abgebildet werden würden, durch die vertikale Defokussierung derart verzerrt werden, dass diese Bildpunkte zumindest abschnittsweise in das Sensorpixel-Array reichen und von Sensorpixel des Sensorpixel-Arrays erfassbar sind,
      oder
   - die im Abbildungsbereich des Projektionssystems abbildbaren Bildpunkte erzeugenden Lichtstrahlen im Wesentlichen ausschließlich in vertikaler Richtung zu bündeln, sodass Bildpunkte, welche ohne dem Einwirken der Abbildungsmodifizierungseinrichtung im Abbildungsbereich außerhalb des Sensorpixel-Arrays abgebildet werden würden, durch die vertikale Bündelung auf das Sensorpixel-Array gelenkt werden, sodass diese Bildpunkte in das Sensorpixel-Array reichen und von Sensorpixel des Sensorpixel-Arrays erfassbar sind,
wobei die Abbildungsmodifizierungseinrichtung zumindest zwei Spiegelflächen umfasst, wobei
die zumindest zwei Spiegelflächen jeweils an einem separaten Halterungsblech angeordnet sind, wobei die Halterungsbleche jeweils einen Befestigungsabschnitt und einen Spiegelflächenabschnitt aufweisen, wobei die Befestigungsabschnitte der Haltebleche an einen Haltekörper mittels einer Befestigungseinrichtung befestigt sind, welcher Haltekörper eingerichtet ist, die Spiegelflächen in Bezug auf das Sensorpixel-Array in einer festlegbaren Position zu halten.

Unter dem Begriff "Objektraum" eines optischen Systems versteht man die Menge aller Objektpunkte, die das System abbilden kann, und unter dem Begriff "Bildraum" die Menge der Punkte, auf die es einen Objektpunkt abbilden kann. Die sich in einer Ebene befindenden Objektpunkte bilden eine "Objektebene", die sich einer Ebene befindenden Bildpunkte bilden eine "Bildebene".

Weiters betrifft die Erfindung einen Kraftfahrzeugscheinwerfer umfassend zumindest eine erfindungsgemäße Sensorvorrichtung.

Typischerweise werden in Sensorvorrichtungen Sensorpixel-Arrays verbaut, welche im Wesentlichen zeilenartig aufgebaut und eine Sensorpixelgröße von 2x2 bis 10x10 Micrometern aufweisen.

In Verwendung mit klassischen Projektionsoptiksystemen, welche auf das Sensorpixel-Array abbilden sollen, ragt die zu erfassende Umgebung aus dem Objektraum in der Abbildung über das Sensorpixel-Array hinaus, sodass gegebenenfalls Objekte, welche in vertikaler Richtung bzw. vertikaler Erstreckung angeordnet sind, schwer bis gar nicht durch das zeilenartigen Sensorpixel-Array erfassbar sind.

Die US 2018/329060 A1 und die EP 3 659 861 A1 zeigen Sensorvorrichtungen aus dem Stand der Technik.

Es ist eine Aufgabe der Erfindung eine verbesserte Sensorvorrichtung für einen Kraftfahrzeugscheinwerfer herzustellen.

Diese Aufgabe wird dadurch gelöst, dass der Spiegelflächenabschnitt und der Befestigungsabschnitt der entsprechenden Halterungsbleche eben ausgebildet sind, wobei der ebene Spiegelflächenabschnitt ausgehend von dem ebenen Befestigungsabschnitt in einem Winkel abstehend angeordnet ist.

Es kann vorgesehen sein, dass die Abbildungsmodifizierungseinrichtung zumindest eine Zylinderlinse umfasst.

Es kann vorgesehen sein, dass die Abbildungsmodifizierungseinrichtung zwei Zylinderlinsenduplets umfasst.

Es kann vorgesehen sein, dass die zwei Zylinderlinsenduplets vier plan-konvexe Linsen umfassen, welche identisch aufgebaut sind.

Es ist vorgesehen, dass die Abbildungsmodifizierungseinrichtung zumindest zwei Spiegelflächen umfasst.

Es kann vorgesehen sein, dass die Spiegelflächen gesehen in einem korrekt eingebauten Zustand der Sensorvorrichtung in einem Kraftfahrzeug oberhalb und unterhalb der optischen Achse des Projektionsoptiksystems angeordnet sind.

Es kann vorgesehen sein, dass die Spiegelflächen ausgehend von dem Projektionsoptiksystem in Richtung des Sensorpixel-Arrays konisch zulaufend angeordnet sind.

Es ist vorgesehen, dass die zumindest zwei Spiegelflächen jeweils an einem separaten Halterungsblech angeordnet sind, wobei die Halterungsbleche jeweils einen Befestigungsabschnitt und einen Spiegelflächenabschnitt aufweisen, wobei die Befestigungsabschnitte der Haltebleche an einen Haltekörper mittels einer Befestigungseinrichtung befestigt sind, welcher Haltekörper eingerichtet ist, die Spiegelflächen in Bezug auf das Sensorpixel-Array in einer festlegbaren Position zu halten.

Es kann vorgesehen sein, dass die Befestigungseinrichtung eine Schraubverbindung ist.

Es ist vorgesehen, dass der Spiegelflächenabschnitt und der Befestigungsabschnitt der entsprechenden Halterungsbleche eben ausgebildet sind, wobei der ebene Spiegelflächenabschnitt ausgehend von dem ebenen Befestigungsabschnitt in einem Winkel abstehend angeordnet ist.

Es kann vorgesehen sein, dass die Spiegelflächen jeweils eben ausgebildet sind.

Es kann vorgesehen sein, dass das Projektionsoptiksystem zumindest eine Projektionslinse umfasst.

Es kann vorgesehen sein, dass das Projektionsoptiksystem rotationssymmetrisch um die optische Achse des Projektionsoptiksystems ist.

Es kann vorgesehen sein, dass das Projektionsoptiksystem achromatisch ausgebildet ist.

Die Aufgabe wird ebenso gelöst durch einen Kraftfahrzeugscheinwerfer umfassend zumindest eine erfindungsgemäße Sensorvorrichtung.

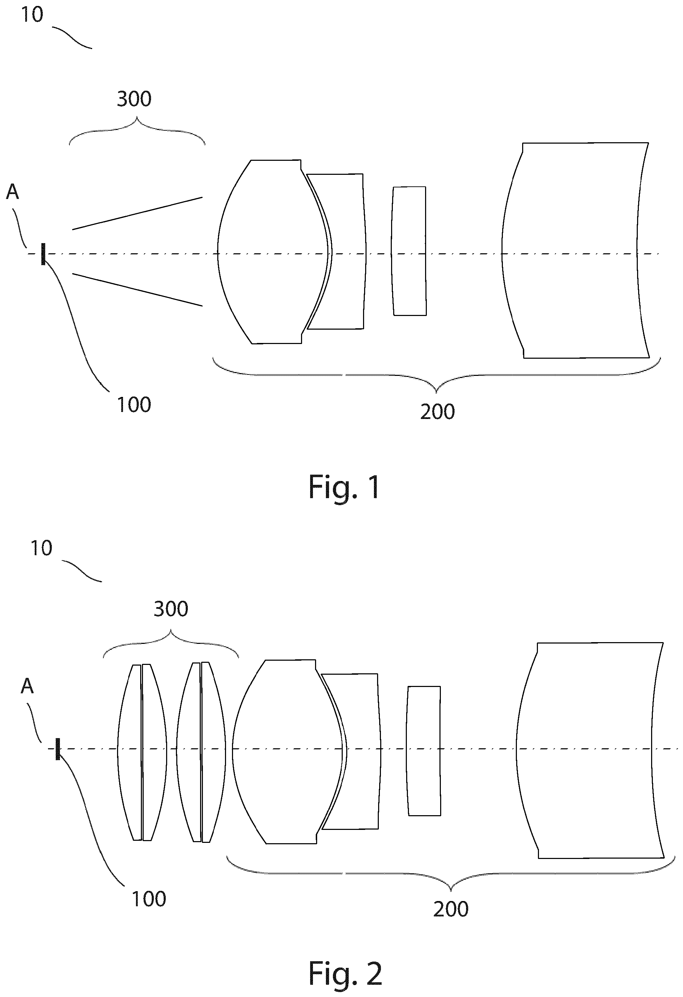

Nachfolgend wird die Erfindung anhand von beispielhaften Zeichnungen näher erläutert. Hierbei zeigt
Fig. 1 eine beispielhafte Sensorvorrichtung für einen Kraftfahrzeugscheinwerfer, wobei die Sensorvorrichtung ein Sensorpixel-Array und ein Projektionsoptiksystem umfasst, wobei die Sensorvorrichtung weiters eine Abbildungsmodifizierungseinrichtung aufweist, welche im gezeigten Beispiel abbildbare Bildpunkte des Projektionsoptiksystems in vertikaler Richtung bündelt,
Fig. 2 eine weitere beispielhafte Sensorvorrichtung für einen Kraftfahrzeugscheinwerfer, wobei die Sensorvorrichtung ein Sensorpixel-Array und ein Projektionsoptiksystem umfasst, wobei die Sensorvorrichtung weiters eine Abbildungsmodifizierungseinrichtung aufweist, welche im gezeigten Beispiel abbildbare Bildpunkte des Projektionsoptiksystems in vertikaler Richtung defokussiert,

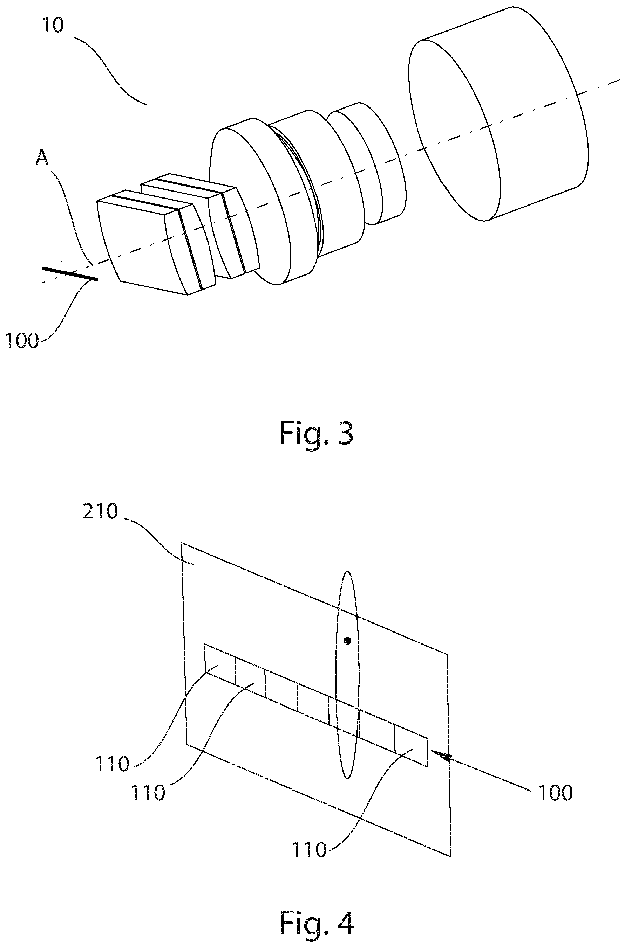

Fig. 3 eine perspektivische Ansicht des Beispiels aus Fig. 2,
Fig. 4 eine schematische Darstellung eines Sensorpixel-Arrays, welches innerhalb eines Abbildungsbereichs des Projektionsoptiksystems angeordnet ist, wobei ein dargestellter exemplarischer Bildpunkt in vertikaler Richtung gemäß dem Beispiel aus Fig. 2 defokussiert ist, sodass der Bildpunkt in das Sensorpixel-Array reicht, und

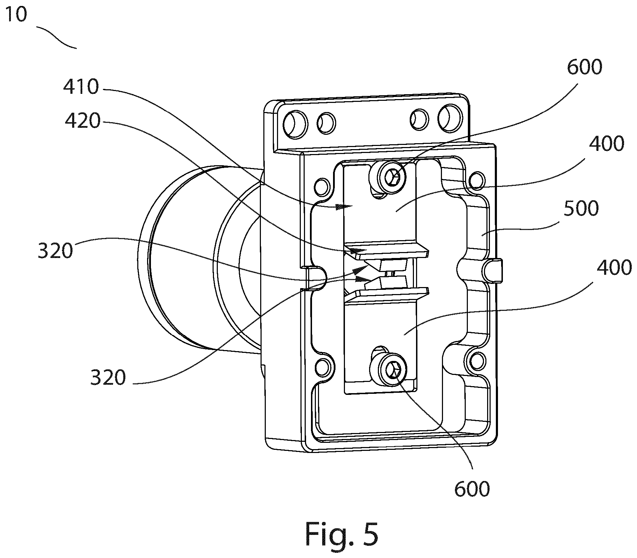

Fig. 5 eine perspektivische Ansicht einer Sensorvorrichtung, welche im Wesentlichen der Sensorvorrichtung aus Fig. 1 entspricht.

**Fig. 1** zeigt eine beispielhafte Sensorvorrichtung **10** für einen Kraftfahrzeugscheinwerfer zum Erkennen eines vor der Sensorvorrichtung **10** vorhandenen, Licht abstrahlenden Objekts, wobei die Sensorvorrichtung **10** ein Sensorpixel-Array **100** zum Erkennen von Licht eines Licht abstrahlenden Objekts umfasst, wobei das Sensorpixel-Array **100** zumindest eine Zeile und mehrere Spalten von Sensorpixeln **110,** welche gesehen in einem ordnungsgemäß eingebauten Zustand der Sensorvorrichtung **10** in einem Kraftfahrzeug entlang einer horizontalen Geraden angeordnet sind, umfasst, wobei das Sensorpixel-Array **100** eingerichtet ist, auf die Sensorpixel **110** einfallendes Licht zu erfassen.

Weiters umfasst die Sensorvorrichtung **10** ein Projektionsoptiksystem **200,** welches eingerichtet ist, Licht abstrahlende Objekte vor dem Projektionsoptiksystem **200** in einem Abbildungsbereich **210** in einer Bildebene des Projektionsoptiksystems **200** in Form von Bildpunkten abzubilden, wobei das Sensorpixel-Array **100** in dem Abbildungsbereich **210** der Bildebene angeordnet ist, wobei der Abbildungsbereich **210** derart größer ist als das Sensorpixel-Array **100,** dass der Abbildungsbereich **210** zumindest in vertikaler Richtung dem Sensorpixel-Array **100** übersteht, wie beispielhaft in **Fig. 4** zu erkennen ist.

Ferner umfasst die Sensorvorrichtung **10** eine Abbildungsmodifizierungseinrichtung **300,** welche zwischen dem Sensorpixel-Array **100** und dem Projektionsoptiksystem **200** angeordnet ist, wobei die Abbildungsmodifizierungseinrichtung **300** im Beispiel aus **Fig. 1** eingerichtet ist, die im Abbildungsbereich **210** des Projektionssystems **200** abbildbaren Bildpunkte erzeugenden Lichtstrahlen im Wesentlichen ausschließlich in vertikaler Richtung zu bündeln, sodass Bildpunkte, welche ohne dem Einwirken der Abbildungsmodifizierungseinrichtung **300** im Abbildungsbereich **210** außerhalb des Sensorpixel-Arrays **100** abgebildet werden würden, durch die vertikale Bündelung auf das Sensorpixel-Array **100** gelenkt werden, sodass diese Bildpunkte in das Sensorpixel-Array **100** reichen und von Sensorpixel **110** des Sensorpixel-Arrays **100** erfassbar sind.

Die Abbildungsmodifizierungseinrichtung **300** aus **Fig. 1** ist als zwei Spiegelflächen **320** ausgebildet, wobei die Spiegelflächen **320** gesehen in einem korrekt eingebauten Zustand der Sensorvorrichtung **10** in einem Kraftfahrzeug oberhalb und unterhalb der optischen Achse **A** des Projektionsoptiksystems **200** angeordnet sind.

Ferner sind die Spiegelflächen **320** ausgehend von dem Projektionsoptiksystem **200** in Richtung des Sensorpixel-Arrays **100** konisch zulaufend angeordnet, wobei die Spiegelflächen **320** eben ausgebildet sind.

**Fig. 2** zeigt eine weitere beispielhafte Vorrichtung im Sinne des Beispiels von **Fig. 1****,** wobei im Unterschied zur Vorrichtung aus **Fig. 1** die Abbildungsmodifizierungseinrichtung **300** eingerichtet ist, die im Abbildungsbereich **210** des Projektionsoptiksystems **200** abbildbaren Bildpunkte im Wesentlichen ausschließlich in vertikaler Richtung zu defokussieren, sodass Bildpunkte, welche ohne dem Einwirken der Abbildungsmodifizierungseinrichtung **300** im Abbildungsbereich **210** außerhalb des Sensorpixel-Arrays **100** abgebildet werden würden, durch die vertikale Defokussierung derart verzerrt werden, dass diese Bildpunkte zumindest abschnittsweise in das Sensorpixel-Array **100** reichen und von Sensorpixel **110** des Sensorpixel-Arrays **100** erfassbar sind. Dieser Umstand ist in **Fig. 4** schematisch dargestellt, wobei in **Fig. 4** der in Schwarz eingezeichnete Punkt, welcher über dem Sensorpixel-Array **100** gezeichnet ist, einem exemplarischen Bildpunkt entspricht, welcher nicht durch die Abbildungsmodifizierungseinrichtung **300** modifiziert wurde. Die um diesen exemplarischen Bildpunkt eingezeichnete in vertikaler Richtung gestreckte Ellipse stellt in der Figur den durch die Abbildungsmodifizierungseinrichtung **300** der Vorrichtung aus **Fig. 2** defokussierten Bildpunkt dar.

Die Abbildungsmodifizierungseinrichtung **300** aus **Fig. 2** ist als zwei Zylinderlinsenduplets ausgebildet, wobei je eine Zylinderlinsenduplet zwei plan-konvexe Zylinderlinsen umfasst, welche vorzugsweise identisch ausgebildet sind. Der Aufbau und die Anordnung der Zylinderlinsen sind beispielsweise auch in **Fig. 3** zu erkennen.

**Fig. 5** zeigt eine perspektivische Ansicht einer Sensorvorrichtung **10,** welche im Wesentlichen der Vorrichtung aus **Fig. 1** entspricht, wobei die Spiegelflächen **320** der Abbildungsmodifizierungseinrichtung **300** jeweils an einem separaten Halterungsblech **400** angeordnet sind, wobei die Halterungsbleche **400** jeweils einen Befestigungsabschnitt **410** und einen Spiegelflächenabschnitt **420** aufweisen, wobei die Befestigungsabschnitte **410** der Haltebleche **400** an einen Haltekörper **500** mittels einer Befestigungseinrichtung **600** befestigt sind, welcher Haltekörper **500** eingerichtet ist, die Spiegelflächen **320** in Bezug auf das Sensorpixel-Array **100** in einer festlegbaren Position zu halten.

Die Befestigungseinrichtung **600** ist im gezeigten Beispiel in **Fig. 5** als eine Schraubverbindung ausgebildet.

Der Spiegelflächenabschnitt **420** und der Befestigungsabschnitt **410** der entsprechenden Halterungsbleche **400** sind dabei eben ausgebildet, wobei der ebene Spiegelflächenabschnitt **420** ausgehend von dem ebenen Befestigungsabschnitt **420** in einem Winkel abstehend angeordnet ist.

Ferner sei festgehalten, dass das Projektionsoptiksystem **200** in allen in den Figuren gezeigten Beispielen zumindest eine Projektionslinse umfasst, wobei das Projektionsoptiksystem **200** bzw. die Projektionslinsen des Projektionsoptiksystems **200** rotationssymmetrisch um die optische Achse **A** des Projektionsoptiksystems **200** ist.

Ferner kann auch vorgesehen sein, dass das Projektionsoptiksystem **200** bzw. die Projektionslinsen des Projektionsoptiksystems **200** achromatisch ausgebildet sind.

### LISTE DER BEZUGSZEICHEN

| | |
|---|---|
| Sensorvorrichtung | 10 |
| Sensorpixel-Array | 100 |
| Sensorpixel | 110 |
| Projektionsoptiksystem | 200 |
| Abbildungsbereich | 210 |
| Abbildungsmodifizierungseinrichtung | 300 |
| Spiegelflächen | 320 |
| Halterungsblech | 400 |
| Befestigungsabschnitt | 410 |
| S piegelflächenabschnitt | 420 |
| Haltekörper | 500 |
| Befestigungseinrichtung | 600 |
| Optische Achse | A |

## Patentansprüche

1. **Sensorvorrichtung** (10) für einen Kraftfahrzeugscheinwerfer zum Erkennen eines vor der Sensorvorrichtung (10) vorhandenen, Licht abstrahlenden Objekts, wobei die Sensorvorrichtung (10) Folgendes umfasst:
- ein Sensorpixel-Array (100) zum Erkennen von Licht eines Licht abstrahlenden Objekts, wobei das Sensorpixel-Array (100) zumindest eine Zeile und mehrere Spalten von Sensorpixeln (110), welche gesehen in einem ordnungsgemäß eingebauten Zustand der Sensorvorrichtung (10) in einem Kraftfahrzeug entlang einer horizontalen Geraden angeordnet sind, umfasst, wobei das Sensorpixel-Array (100) eingerichtet ist, auf die Sensorpixel (110) einfallendes Licht zu erfassen,
- ein Projektionsoptiksystem (200), welches eingerichtet ist, Licht abstrahlende Objekte vor dem Projektionsoptiksystem (200) in einem Abbildungsbereich (210) in einer Bildebene des Projektionsoptiksystems (200) in Form von Bildpunkten abzubilden, wobei das Sensorpixel-Array (100) in dem Abbildungsbereich (210) der Bildebene angeordnet ist, wobei der Abbildungsbereich (210) derart größer ist als der Sensorpixel-Array (100), dass der Abbildungsbereich (210) zumindest in vertikaler Richtung dem Sensorpixel-Array (100) übersteht,
wobei die Sensorvorrichtung (10) eine Abbildungsmodifizierungseinrichtung (300) umfasst, welche zwischen dem Sensorpixel-Array (100) und dem Projektionsoptiksystem (200) angeordnet ist, wobei die Abbildungsmodifizierungseinrichtung (300) eingerichtet ist,
- die im Abbildungsbereich (210) des Projektionsoptiksystems (200) abbildbaren Bildpunkte im Wesentlichen ausschließlich in vertikaler Richtung zu defokussieren, sodass Bildpunkte, welche ohne dem Einwirken der Abbildungsmodifizierungseinrichtung (300) im Abbildungsbereich (210) außerhalb des Sensorpixel-Arrays (100) abgebildet werden würden, durch die vertikale Defokussierung derart verzerrt werden, dass diese Bildpunkte zumindest abschnittsweise in das Sensorpixel-Array (100) reichen und von Sensorpixel (110) des Sensorpixel-Arrays (100) erfassbar sind,
oder
- die im Abbildungsbereich (210) des Projektionssystems (200) abbildbaren Bildpunkte erzeugenden Lichtstrahlen im Wesentlichen ausschließlich in vertikaler Richtung zu bündeln, sodass Bildpunkte, welche ohne dem Einwirken der Abbildungsmodifizierungseinrichtung (300) im Abbildungsbereich (210) außerhalb des Sensorpixel-Arrays (100) abgebildet werden würden, durch die vertikale Bündelung auf das Sensorpixel-Array (100) gelenkt werden, sodass diese Bildpunkte in das Sensorpixel-Array (100) reichen und von Sensorpixel (110) des Sensorpixel-Arrays (100) erfassbar sind,
**dadurch gekennzeichnet, dass**
die Abbildungsmodifizierungseinrichtung (300) zumindest zwei Spiegelflächen (320) umfasst, wobei
die zumindest zwei Spiegelflächen (320) jeweils an einem separaten Halterungsblech (400) angeordnet sind, wobei die Halterungsbleche (400) jeweils einen Befestigungsabschnitt (410) und einen Spiegelflächenabschnitt (420) aufweisen, wobei die Befestigungsabschnitte (410) der Haltebleche (400) an einen Haltekörper (500) mittels einer Befestigungseinrichtung (600) befestigt sind, welcher Haltekörper (500) eingerichtet ist, die Spiegelflächen (320) in Bezug auf das Sensorpixel-Array (100) in einer festlegbaren Position zu halten,
wobei der Spiegelflächenabschnitt (420) und der Befestigungsabschnitt (410) der entsprechenden Halterungsbleche (400) eben ausgebildet sind, wobei der ebene Spiegelflächenabschnitt (420) ausgehend von dem ebenen Befestigungsabschnitt (420) in einem Winkel abstehend angeordnet ist.

2. Sensorvorrichtung nach Anspruch 1, **dadurch gekennzeichnet, dass** die Abbildungsmodifizierungseinrichtung (300) zumindest eine Zylinderlinse umfasst.

3. Sensorvorrichtung nach Anspruch 2, **dadurch gekennzeichnet, dass** die Abbildungsmodifizierungseinrichtung (300) zwei Zylinderlinsenduplets umfasst.

4. Sensorvorrichtung nach Anspruch 3, **dadurch gekennzeichnet, dass** die zwei Zylinderlinsenduplets vier plan-konvexe Linsen umfassen, welche identisch aufgebaut sind.

5. Sensorvorrichtung nach einem der vorhergehenden Ansprüche, **dadurch gekennzeichnet, dass** die Spiegelflächen (320) gesehen in einem korrekt eingebauten Zustand der Sensorvorrichtung (10) in einem Kraftfahrzeug oberhalb und unterhalb der optischen Achse (A) des Projektionsoptiksystems (200) angeordnet sind.

6. Sensorvorrichtung nach Anspruch 5, **dadurch gekennzeichnet, dass** die Spiegelflächen (320) ausgehend von dem Projektionsoptiksystem (200) in Richtung des Sensorpixel-Arrays (100) konisch zulaufend angeordnet sind.

7. Sensorvorrichtung nach einem der vorhergehenden Ansprüche, **dadurch gekennzeichnet, dass** die Befestigungseinrichtung (600) eine Schraubverbindung ist.

8. Sensorvorrichtung nach einem der Ansprüche 4 bis 7, **dadurch gekennzeichnet, dass** die Spiegelflächen (320) jeweils eben ausgebildet sind.

9. Sensorvorrichtung nach einem der Ansprüche 1 bis 8, **dadurch gekennzeichnet, dass** das Projektionsoptiksystem (200) zumindest eine Projektionslinse umfasst.

10. Sensorvorrichtung nach einem der Ansprüche 1 bis 9, **dadurch gekennzeichnet, dass** das Projektionsoptiksystem (200) rotationssymmetrisch um die optische Achse (A) des Projektionsoptiksystems (200) ist.

11. Sensorvorrichtung nach einem der Ansprüche 1 bis 10, **dadurch gekennzeichnet, dass** das Projektionsoptiksystem (200) achromatisch ausgebildet ist.

12. **Kraftfahrzeugscheinwerfer** umfassend zumindest eine Sensorvorrichtung (10) nach einem der Ansprüche 1 bis 11.

## Claims

1. Sensor device (10) for a motor vehicle headlight for detecting a light-emitting object present in front of the sensor device (10), wherein the sensor device (10) comprises:
- a sensor pixel array (100) for detecting light from a light-emitting object, wherein the sensor pixel array (100) comprises at least one row and a plurality of columns of sensor pixels (110) arranged along a horizontal straight line as seen in a properly installed state of the sensor device (10) in a motor vehicle, the sensor pixel array (100) being arranged to detect light incident on the sensor pixels (110),
- a projection optical system (200) which is designed to project light-emitting objects in front of the projection optical system (200) in an imaging area (210) in an image plane of the projection optical system (200) in the form of pixels, wherein the sensor pixel array (100) is arranged in the imaging area (210) of the image plane, wherein the imaging area (210) is larger than the sensor pixel array (100) such that the imaging area (210) protrudes beyond the sensor pixel array (100) at least in the vertical direction (100),
wherein the sensor device (10) comprises an image modification device (300) which is arranged between the sensor pixel array (100) and the projection optical system (200), wherein the image modification device (300) is designed
- defocus the image points that can be imaged in the imaging area (210) of the projection optical system (200) substantially exclusively in the vertical direction, so that image points that would be imaged outside the sensor pixel array (100) in the imaging area (210) without the action of the image modification device (300) (100) would be imaged without the action of the image modification device (300) are distorted by the vertical defocusing in such a way that these pixels extend at least partially into the sensor pixel array (100) and can be detected by sensor pixels (110) of the sensor pixel array (100),
or
- to bundle the light beams generating pixels imaged in the imaging area (210) of the projection system (200), are essentially focused exclusively in the vertical direction, so that image points which, without the action of the image modification device (300), would be imaged in the imaging area (210) outside the sensor pixel array (100) would be imaged outside the imaging area (210) are directed onto the sensor pixel array (100) by the vertical bundling, so that these pixels extend into the sensor pixel array (100) and can be detected by sensor pixels (110) of the sensor pixel array (100),
**characterized in that** the image modification device (300) comprises at least two mirror surfaces (320), wherein
the at least two mirror surfaces (320) are each arranged on a separate mounting plate (400), wherein the mounting plates (400) each have a fastening section (410) and a mirror surface section (420), wherein the fastening sections (410) of the mounting plates (400) are fastened to a mounting body (500) by means of a fastening device (600), which mounting body (500) is designed to hold the mirror surfaces (320) in a definable position relative to the sensor pixel array (100),
wherein
the mirror surface section (420) and the fastening section (410) of the corresponding retaining plates (400) are formed flat, wherein the flat mirror surface section (420) is arranged at an angle extending from the flat fastening section (420).

2. Sensor device according to claim 1, **characterized in that** the image modification device (300) comprises at least one cylindrical lens.

3. Sensor device according to claim 2, **characterized in that** the image modification device (300) comprises two cylindrical lens doublets.

4. Sensor device according to claim 3, **characterized in that** the two cylindrical lens doublets comprise four plano-convex lenses which are identically constructed.

5. Sensor device according to one of the preceding claims, **characterized in that** the mirror surfaces (320), viewed in a correctly installed state of the sensor device (10) in a motor vehicle, are arranged above and below the optical axis (A) of the projection optical system (200).

6. Sensor device according to claim 5, **characterized in that** the mirror surfaces (320) are arranged conically tapering from the projection optical system (200) in the direction of the sensor pixel array (100).

7. Sensor device according to one of the preceding claims, **characterized in that** the fastening device (600) is a screw connection.

8. Sensor device according to one of claims 4 to 7, **characterized in that** the mirror surfaces (320) are each designed to be flat.

9. Sensor device according to one of claims 1 to 8, **characterized in that** the projection optics system (200) comprises at least one projection lens.

10. Sensor device according to one of claims 1 to 9, **characterized in that** the projection optical system (200) is rotationally symmetrical about the optical axis (A) of the projection optical system (200).

11. Sensor device according to one of claims 1 to 10, **characterized in that** the projection optical system (200) is achromatic.

12. Motor vehicle headlight comprising at least one sensor device (10) according to one of claims 1 to 11.

## Revendications

1. Dispositif capteur (10) pour un phare de véhicule automobile destiné à détecter un objet émettant de la lumière présent devant le dispositif capteur (10), le dispositif capteur (10) comprenant :
- un réseau de pixels de capteur (100) pour détecter la lumière d'un objet émettant de la lumière, le réseau de pixels de capteur (100) comprenant au moins une ligne et plusieurs colonnes de pixels de capteur (110) qui, dans un état correctement installé du dispositif capteur (10) dans un véhicule automobile, sont disposées le long d'une ligne droite horizontale, le réseau de pixels capteurs (100) étant conçu pour détecter la lumière incidente sur les pixels capteurs (110),
- un système optique de projection (200) qui est conçu pour représenter des objets émettant de la lumière devant le système optique de projection (200) dans une zone d'image (210) dans un plan image du système optique de projection (200) sous la forme de points d'image, le réseau de pixels de capteur (100) étant disposé dans la zone d'image (210) du plan image, la zone d'image (210) étant plus grande que le réseau de pixels de capteur (100) de telle sorte que la zone d'image (210) dépasse au moins dans la direction verticale du réseau de pixels de capteur (100),
le dispositif capteur (10) comprenant un dispositif de modification d'image (300) qui est disposé entre le réseau de pixels capteurs (100) et le système optique de projection (200), le dispositif de modification d'image (300) étant conçu pour
- défocaliser les points d'image pouvant être représentés dans la zone d'image (210) du système optique de projection (200) essentiellement exclusivement dans le sens vertical, de sorte que les points d'image qui, sans l'action du dispositif de modification d'image (300), seraient représentés dans la zone d'image (210) en dehors du réseau de pixels du capteur (100) seraient représentés, sont déformés par la défocalisation verticale de telle sorte que ces points d'image s'étendent au moins par sections dans le réseau de pixels du capteur (100) et peuvent être détectés par les pixels du capteur (110) du réseau de pixels du capteur (100),
ou
- de regrouper les rayons lumineux générant des points d'image représentables dans la zone de représentation (210) du système de projection (200), de manière à ce que les points d'image qui, sans l'action du dispositif de modification de l'image (300), seraient représentés dans la zone de représentation (210) en dehors de la matrice de pixels du capteur (100) seraient représentés dans la zone de représentation (210) en dehors du réseau de pixels du capteur (100), sont dirigés vers le réseau de pixels du capteur (100) par le faisceau vertical, de sorte que ces points d'image atteignent le réseau de pixels du capteur (100) et peuvent être détectés par les pixels du capteur (110) du réseau de pixels du capteur (100),
**caractérisé en ce que** le dispositif de modification d'image (300) comprend au moins deux surfaces réfléchissantes (320),
les au moins deux surfaces réfléchissantes (320) sont chacune disposées sur une tôle de support séparée (400), les tôles de support (400) comportant chacune une partie de fixation (410) et une partie de surface réfléchissante (420), les parties de fixation (410) des tôles de support (400) sont fixées à un corps de support (500) au moyen d'un dispositif de fixation (600), lequel corps de support (500) est conçu pour maintenir les surfaces réfléchissantes (320) dans une position pouvant être fixée par rapport au réseau de pixels de capteur (100),
la partie de surface réfléchissante (420) et la partie de fixation (410) des tôles de support (400) correspondantes étant de forme plane, la partie de surface réfléchissante plane (420) étant disposée de manière à former un angle par rapport à la partie de fixation plane (420).

2. Dispositif capteur selon la revendication 1, **caractérisé en ce que** le dispositif de modification d'image (300) comprend au moins une lentille cylindrique.

3. Dispositif capteur selon la revendication 2, **caractérisé en ce que** le dispositif de modification d'image (300) comprend deux paires de lentilles cylindriques.

4. Dispositif capteur selon la revendication 3, **caractérisé en ce que** les deux paires de lentilles cylindriques comprennent quatre lentilles plano-convexes de construction identique.

5. Dispositif capteur selon l'une des revendications précédentes, **caractérisé en ce que** les surfaces réfléchissantes (320), vues dans un état correctement monté du dispositif capteur (10) dans un véhicule automobile, sont disposées au-dessus et au-dessous de l'axe optique (A) du système optique de projection (200).

6. Dispositif capteur selon la revendication 5, **caractérisé en ce que** les surfaces réfléchissantes (320) sont disposées de manière conique à partir du système optique de projection (200) en direction du réseau de pixels du capteur (100).

7. Dispositif capteur selon l'une des revendications précédentes, **caractérisé en ce que** le dispositif de fixation (600) est un raccord vissé.

8. Dispositif capteur selon l'une des revendications 4 à 7, **caractérisé en ce que** les surfaces réfléchissantes (320) sont chacune planes.

9. Dispositif capteur selon l'une des revendications 1 à 8, **caractérisé en ce que** le système optique de projection (200) comprend au moins une lentille de projection.

10. Dispositif capteur selon l'une des revendications 1 à 9, **caractérisé en ce que** le système optique de projection (200) est symétrique en rotation autour de l'axe optique (A) du système optique de projection (200).

11. Dispositif capteur selon l'une des revendications 1 à 10, **caractérisé en ce que** le système optique de projection (200) est de conception achromatique.

12. Projecteur de véhicule automobile comprenant au moins un dispositif capteur (10) selon l'une des revendications 1 à 11.
